# EUROPEAN PATENT APPLICATION

(11) **EP 1 898 308 A1**
(43) Date of publication of application: **12.03.2008**
(21) Application number: 07114775.5
(22) Date of filing: 22.08.2007
(51) Int. Cl.: G06F 9/46

(54) **Apparatus and method for implementing components, and apparatus and method for verifying components**

(30) Priority: 23.08.2006 KR 20060080029
(71) Applicant: Samsung Electronics Co., Ltd., Suwon-si, Gyeonggi-Do 442-742 (KR)
(72) Inventor: Jeong, Eui-Heon, Gyeonggi-do (KR); Park, Chong-Mok, Seoul (KR); Min, Kyung-Sub, Seoul (KR); Choi, Yoon-Hee, Gyeonggi-do (KR); Lee, Gwang-Lim, Gyeonggi-do (KR)
(74) Representative: Robinson, Ian Michael

(57) **Abstract**

An apparatus and method for implementing components of software that are not dependent on a specific environment and an apparatus and method for verifying components of software that are not dependent on a specific environment, the apparatus for implementing components including: an extractor (110) to extract symbols from source codes of a plurality of components; an analyzer (120) to analyze dependencies between the plurality of components using the extracted symbols; a preparation unit (130) to describe dependency information in interfaces of the components based on the analyzed dependencies; and a converter (140) to convert the dependency information into Interface Definition Language (IDL) type information.

## Description

### BACKGROUND OF THE INVENTION

### 1. Field of the Invention

Aspects of the present invention relate to an apparatus and method for implementing components of software and an apparatus and method for verifying components of software, and more particularly, to an apparatus and method for implementing components of software that are not dependent on a specific environment and an apparatus and method for verifying components of software that are not dependent on a specific environment.

### 2. Description of the Related Art

Rapid advancements made in the hardware industry have allowed manufacturers to make high-end devices with various functions within reduced time, and have reduced the technical gap between manufacturers. However, much time and cost are needed for the development of software required to operate these devices. As a result, the software may determine the success or failure of a product. However, even for a manufacturer that has the capability to develop software suitable to operate high-end hardware, it is difficult to develop corresponding software for each hardware item whenever the hardware item is developed. This is because the variety of hardware items is increasing and the development period of hardware is decreasing. Therefore, the reuse of source codes of legacy software that has already been developed at great time and cost must be considered. In order to reuse the legacy software that has already been developed, each module of the legacy software should be configured as a component through Component Based Software Development (CBSD). The component should be expressed and encapsulated by an interface that indicates dependence on other components while externally showing its own characteristic and functionality.

The interface may define a package of services provided by a component, and may be configured as a set of constants and functions. Furthermore, in order to enable a component to be used irrespective of a specific environment, the interface should be expressed by an Interface Definition Language (IDL), which is a standard language. The IDL provides an independent interface to an Operating System (OS) and a programming language, and provides portability between different networks, different types of computers, and/or different OSs. An interface expressed by the IDL can be compiled according to a purpose of use or an environment so that the interface can be used in a variety of modified formats (such as C/C++ header files, type libraries, and/or stubs).

Korean Patent No. 2003-0094802 has disclosed conversion between interfaces in which an interface is simply converted to another type of interface, rather than being defined from source codes of a component, in order to implement legacy software as components in a legacy system. Thus, in order to encapsulate the source codes of a component into an interface in accordance with an IDL type, a component developer manually converts a function prototype or the like, expressed by a programming language, into an IDL, which requires much time and effort. Moreover, when the function prototype or the like is directly converted to a type library, a stub, etc., instead of being converted to the IDL, the function prototype is dependent on a specific environment, so that the portability to applicable environments or reusable environments is greatly reduced.

### SUMMARY OF THE INVENTION

According to the present invention there is provided an apparatus and method as set forth in the appended claims. Other features of the invention will be apparent from the dependent claims, and the description which follows.

Aspects of the present invention provide an apparatus and method for implementing components of software to enable the components to be used irrespective of a specific environment, and an apparatus and method for verifying components of software to provide reliable components.

According to an aspect of the present invention, there is provided an apparatus for implementing components of software to enable the components to be executed by a processor, the apparatus including: an extractor to extract symbols from source codes of a plurality of components; an analyzer to analyze dependencies between the plurality of components using the extracted symbols; a preparation unit to describe dependency information in interfaces of the plurality of components according to the analyzed dependencies; and a converter to convert the dependency information into Interface Definition Language (IDL) type information for enabling communication between different components irrespective of a language of each component within the software.

According to another aspect of the present invention, there is provided an apparatus for verifying components of software, the apparatus including: a dependency verification unit to verify whether definitions of symbols in interfaces of a plurality of components correspond to dependencies between the plurality of components; a compiler to compile source codes of the plurality of components to convert the source codes into binary codes; and an integrity verification unit to verify whether definitions of symbols in binary codes of the plurality of components coincide with the definitions of the symbols in the interfaces of the plurality of components.

According to a still another aspect of the present invention, there is provided a method of implementing components of software to enable the components to be executed by a processor irrespective of a specific environment, the method including: extracting symbols from source codes of a plurality of components; analyzing dependencies between the plurality of components using the extracted symbols; describing dependency information in interfaces of the plurality of components based on the analyzed dependencies; and converting the dependency information into IDL type information for enabling communication between different components irrespective of a language of each component within the software.

According to yet another aspect of the present invention, there is provided a method for verifying components of software, the method including: verifying whether definitions of symbols in interfaces of a plurality of components correspond to dependencies between the plurality of components; compiling source codes of the plurality of components to convert the source codes into binary codes; and verifying whether definitions of symbols in the binary codes of the plurality of components coincide with the definitions of the symbols in the interfaces of the plurality of components.

According to another aspect of the present invention, there is provided an apparatus for implementing components of software, the apparatus including: an analyzer to analyze dependencies between a plurality of components; a preparation unit to define dependency information in interfaces of the plurality of components according to the analyzed dependencies; and a converter to convert the dependency information into Interface Definition Language (IDL) type information.

According to still another aspect of the present invention, there is provided method of implementing components of software, the method including: analyzing dependencies between a plurality of components; defining dependency information in interfaces of the plurality of components based on the analyzed dependencies; and converting the dependency information into IDL type information.

According to another aspect of the present invention, there is provided an apparatus for implementing and verifying components of software to enable and provide reliable components to be used irrespective of a specific environment, the apparatus including: an analyzer to analyze dependencies between a plurality of components; a preparation unit to define dependency information in interfaces of the plurality of components according to the analyzed dependencies; a converter to convert the dependency information into Interface Definition Language (IDL) type information; a dependency verification unit to verify whether definitions of symbols in the interfaces of the plurality of components correspond to the dependencies between the plurality of components; and an integrity verification unit to verify whether definitions of symbols in binary codes of the plurality of components coincide with the definitions of the symbols in the interfaces of the plurality of components.

According to yet another aspect of the present invention, there is provided method of implementing and verifying components of software to enable and provide reliable components to be used irrespective of a specific environment, the method including: analyzing dependencies between a plurality of components; defining dependency information in interfaces of the plurality of components based on the analyzed dependencies; converting the dependency information into IDL type information; verifying whether definitions of symbols in the interfaces of the plurality of components correspond to the dependencies between the plurality of components; and verifying whether definitions of symbols in binary codes of the plurality of components coincide with the definitions of the symbols in the interfaces of the plurality of components.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a block diagram of an apparatus for implementing components according to an example embodiment of the present invention;
FIG. 2 is a block diagram of an apparatus for verifying components according to an example embodiment of the present invention;
FIG. 3 is a flow chart illustrating a method of implementing components according to an example embodiment of the present invention;
FIG. 4 is a flow chart illustrating a method of verifying components according to an example embodiment of the present invention;
FIG. 5 is a conceptual view illustrating a process of extracting symbols from a component and analyzing dependence between components using the extracted symbols according to an example embodiment of the present invention;
FIG. 6 is a flow chart illustrating a process of converting the dependency information of an interface into an IDL type according to an example embodiment of the present invention;
FIG. 7 illustrates a process in which the dependency information of the interface is converted into the IDL type according to an example embodiment of the present invention;
FIG. 8 is a table showing examples of an IDL data type according to an example embodiment of the present invention;
FIG. 9 is a table showing examples of an IDL attribute according to an example embodiment of the present invention; and
FIG. 10 is a conceptual view illustrating a process of verifying components implemented according to an example embodiment of the present invention.

### DETAILED DESCRIPTION OF THE EMBODIMENTS

Advantages and features of the present invention, and ways to achieve them will be apparent from embodiments of the present invention as will be described below together with the accompanying drawings. However, the scope of the present invention is not limited to such embodiments and the present invention may be realized in various forms. The embodiments to be described below are nothing but the ones provided to bring the disclosure of the present invention to perfection and assist those skilled in the art to completely understand the present invention. The present invention is defined only by the scope of the appended claims. Also, the same reference numerals are used to designate the same elements throughout the specification.

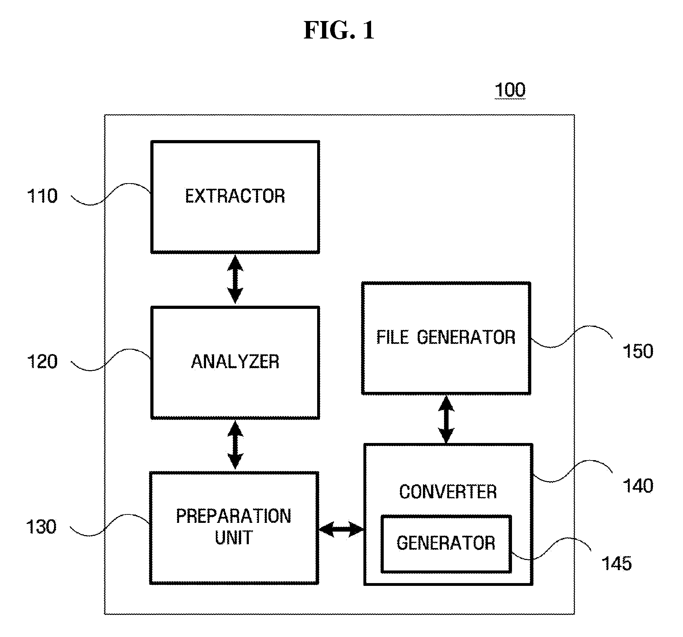

FIG. 1 is a block diagram of an apparatus for implementing components according to an example embodiment of the present invention. The apparatus 100 for implementing components includes an extractor 110, an analyzer 120, a preparation unit 130, a converter 140, and a file generator 150.

The extractor 110 extracts symbols (such as functions, constants and variables) from source codes of multiple components, whereby the extracted symbols become elements of interfaces of the components. For example, a user can first extract the components by selecting a set of files and directories to be objects of the components from legacy software through the extractor 110. Furthermore, the symbols of each of the components may be divided into exported and imported symbols. The exported symbols refer to symbols that a component will provide to the outside, and the imported symbols refer to symbols that a component requires another component to provide.

The analyzer 120 analyzes dependence between components using the extracted symbols. The analyzer 120 may use an analysis tool such as existing EDG, Understand C/C++, SPLint, GCC-AST, DWARF, etc. For example, symbols extracted through the extractor 110 are divided into symbols directly defined within a first component (such as exported functions and variables) and symbols which are used within the first component without being defined by the first component (such as imported functions and variables). Accordingly, the first component has a dependency on a second component that defines the latter symbols that are used within the first component without being defined by the first component.

The preparation unit 130 describes (defines) dependency information in the interface in accordance with the analysis by the analyzer 120. The dependency information may include information on an Interface Definition Language (IDL) file of another component, which a component imports according to a dependence therebetween, and symbols that the component describes in its own source codes and will export. The IDL file refers to a file containing an IDL type interface generated through the file generator 150, which will be described later.

The converter 140 converts the dependency information of the interface expressed in a predetermined language (such as C or C++) into an IDL type. To this end, the converter 140 includes the generator 145. In the process of converting the dependency information into the IDL type, attributes may be defined within each symbol. Accordingly, a component containing an IDL type interface may be used in a distributed environment.

The generator 145 generates a unique ID and name of the interface. At this time, the generator 145 may generate the unique ID by using an identifier (such as a Universal Unique Identifier (UUID)), and the name by using the filename of an IDL file. Furthermore, the converter 140 classifies the data types of symbols within the dependency information (such as a sign, size, etc.), and converts each of the classified data types of the symbols into an IDL data type.

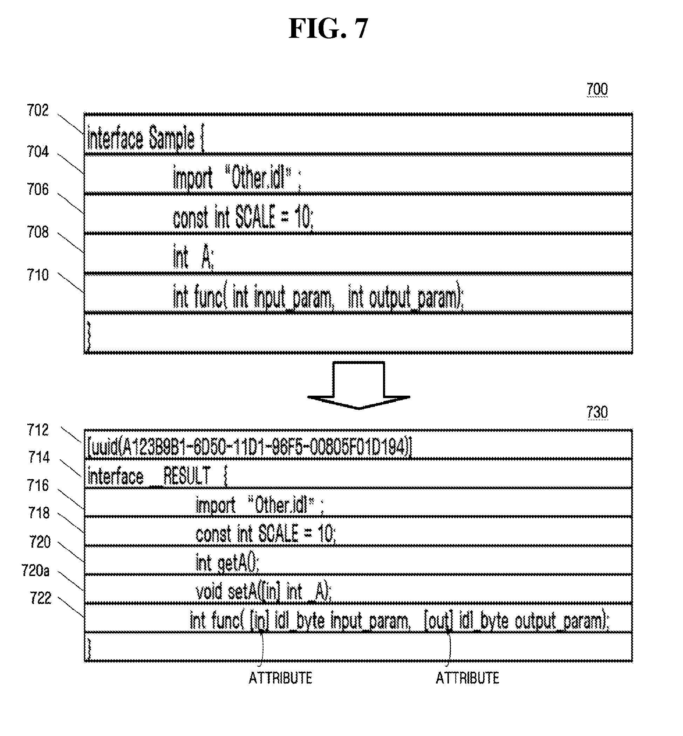

At this time, in the case where the symbol is a variable, which the IDL type does not define, the variable is described by being converted into a predetermined method that informs the outside (or a user) that the corresponding variable exists within the source codes of the component. That is, only the method may allow access to the variable within the source codes of the component, while preventing direct access thereto from the outside. A detailed example will be described below with reference to FIG. 7.

The file generator 150 generates an interface containing dependency information converted into an IDL type as an IDL file. The file generator 150 may be included in the converter 140 in another embodiment.

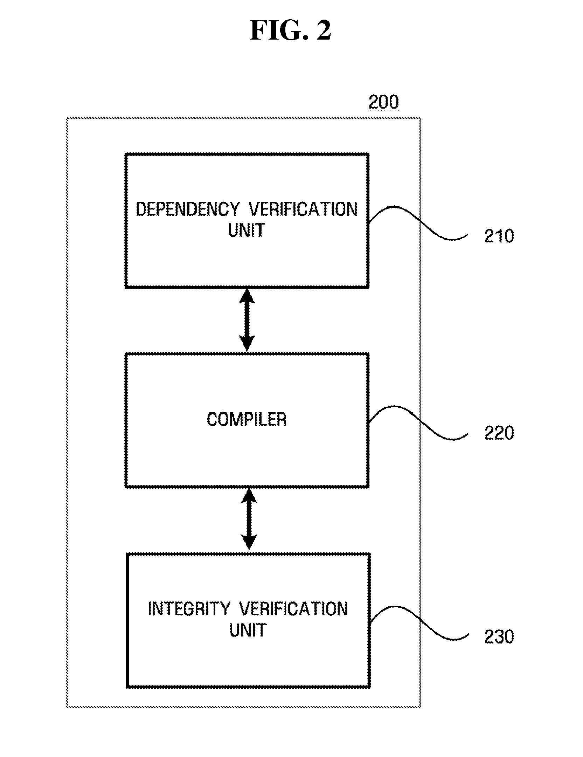

FIG. 2 is a block diagram of an apparatus for verifying components according to an example embodiment of the present invention. The apparatus 200 for verifying components includes a dependency verification unit 210, a compiler 220, and an integrity verification unit 230.

The dependency verification unit 210 verifies whether the definitions of symbols in an interface of a component correspond to the dependencies between components in a plurality of components. For example, if component A imports functions or variables (symbols) defined in component B, the dependency verification unit 210 verifies whether the imported symbols used by component A are described (defined) in an interface of component B. Such dependency verification may be performed for each component.

The compiler 220 compiles the source codes of the component to be converted into binary codes.

The integrity verification unit 230 verifies whether the definition of symbols in the binary codes of the component correspond to the symbols defined in the interface of the component. For example, the integrity verification unit 230 verifies whether symbols that component A will provide to the outside, described in an interface expressed in an IDL, really exist in the binary codes of component A. To do this, the existing operating system (such as Unix or Linux) may extract a symbol (first symbol) from the source codes of a compiled component by using a command, such as nm or objectdump, and/or various libraries. Moreover, an existing IDL compiler may extract a symbol (second symbol) defined in an interface expressed in an IDL. Accordingly, the integrity verification unit 230 can verify whether the description of the first symbol in the source codes of the component coincides with the description of the second symbol in the interface of the component.

The structural elements and units shown in FIGS. 1 and 2 may be configured as a kind of 'module'. As used herein, the term module refers to a software element or a hardware element, such as a Field Programmable Gate Array (FPGA) or an Application Specific Integrated Circuit (ASIC), which performs a predetermined function. However, the unit or module does not always have a meaning limited to software or hardware. The module may be constructed either to be stored in an addressable storage medium or to execute one or more processors. Therefore, the module includes, for example, software elements, object-oriented software elements, class elements or task elements, processes, functions, properties, procedures, subroutines, segments of a program code, drivers, firmware, micro-codes, circuits, data, database, data structures, tables, arrays, and parameters. The elements and functions provided by the modules may be either combined into a smaller number of elements or modules or divided into a larger number of elements or modules.

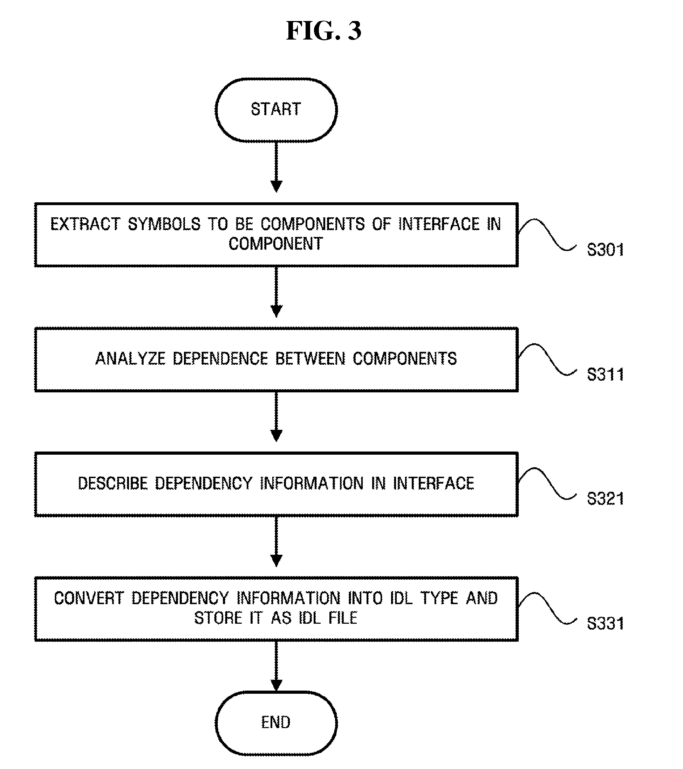

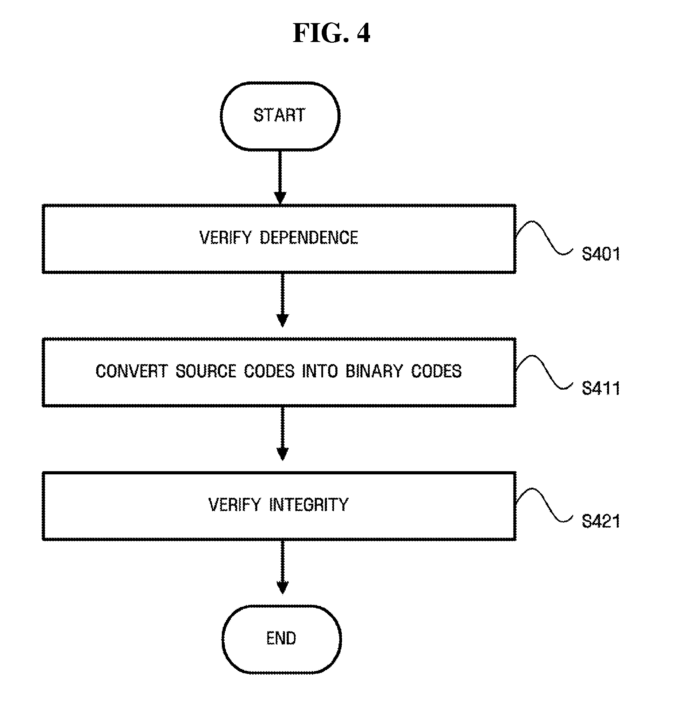

Hereinafter, methods of implementing components and verifying the implemented components will be described for each step with reference to FIGS. 3 and 4, respectively.

FIG. 3 is a flow chart illustrating a method of implementing components according to an example embodiment of the present invention. Referring to FIGS. 1 and 3, first, the extractor 110 extracts symbols from source codes of a plurality of components, wherein the extracted symbols become elements of interfaces of the components (operation S301).

The analyzer 120 analyzes dependencies between the components using the extracted symbols (operation S311). The analyzer 120 may use one or more analysis tools such as existing EDG, Understand C/C++, SPLint, GCC-AST, DWARF, etc.

Next, the preparation unit 130 describes dependency information in the interface based on the analyzed dependencies (operation S321).

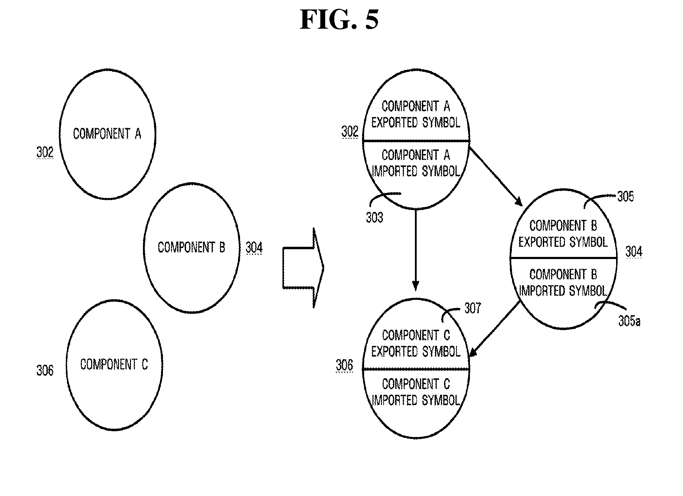

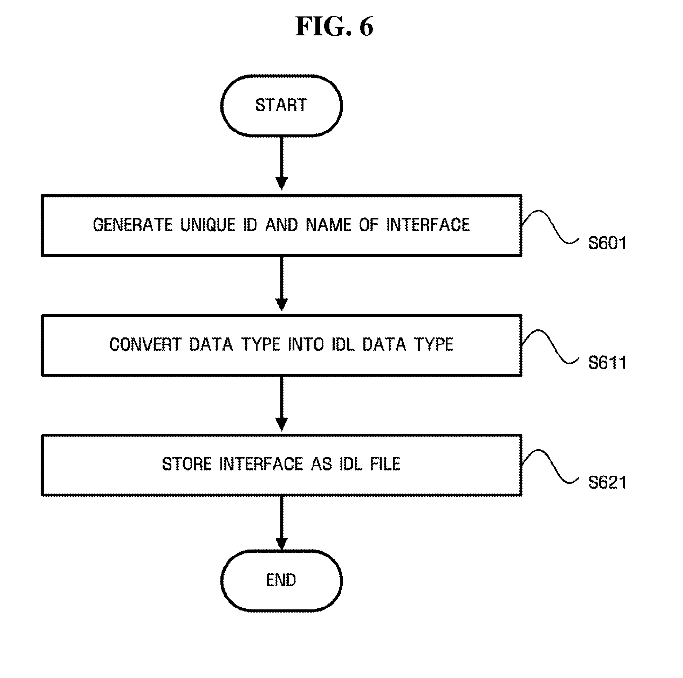

The converter 140 converts the dependency information described in the interface into an IDL type, and the file generator 150 generates an interface containing the converted IDL type dependency information as an IDL file (operation S331). Operation S331 will be described in more detail with reference to FIGS. 5 and 6.

FIG. 4 is a flow chart illustrating a method of verifying components according to an example embodiment of the present invention. Referring to FIGS. 2 and 4, first, the dependency verification unit 210 verifies whether definitions of symbols in an interface of a component correspond to dependencies between components in a plurality of components (operation S401).

Then, the compiler 220 compiles source codes of the components, thereby converting them into binary codes (operation S411).

Next, the integrity verification unit 230 verifies whether definitions of symbols in the binary codes of the component coincide with definitions of the symbols in the interface of the component (operation S421).

Hereinafter, a method of analyzing dependence between components will be described with reference to FIGS. 1 and 5. FIG. 5 is a conceptual view illustrating a process of extracting symbols from a component and analyzing dependence between components using the extracted symbols according to an example embodiment of the present invention.

As shown, the extractor 110 extracts a plurality of components 302, 304, and 306 from legacy software within a legacy system. It is provided as an example that the source codes of each of the components 302, 304 and 306 are programmed in a C or C++ language. However, aspects of the present invention are not limited thereto, and the source codes may be in other languages (such as assembly language). The extractor 110 may extract symbols from the source codes of the components so that the extracted symbols become elements of interfaces of the components.

Next, the analyzer 120 analyzes dependencies between the components using the extracted symbols. For example, if a symbol 303 imported by component A 302 is defined as exported symbols 305 and 307 of components B and C 304 and 306, then component A 302 is dependent on components B and/or C 304 or 306. Furthermore, if a symbol 305a imported by component B 304 is defined as an exported symbol 307 of component C 306, then component B 304 is dependent on component C 306.

Thereafter, the preparation unit 130 describes or defines dependency information in the interface of each component according to the analyzed dependencies. The dependency information may include information on an IDL file of another component, which a component imports in accordance with dependencies between the components, and symbols that the component describes in its own source codes and will simultaneously export to the outside.

Hereinafter, a method of converting dependency information of an interface into an IDL type will be described with reference to FIGS. 1 and 6. FIG. 6 is a flow chart illustrating a process of converting the dependency information of an interface into an IDL type according to an example embodiment of the present invention.

First, the generator 145 generates the unique ID and name of the interface (operation S601). At this time, the generator 145 may generate the unique ID using an identifier (such as a Universal Unique Identifier (UUID)), and the name using the filename of an IDL file (or vice-versa).

Furthermore, the converter 140 classifies the data types of symbols within the dependency information (such as a sign, size, etc.), and converts each of the classified data types of the symbols into an IDL data type (operation S611). In operation S611, attributes may be defined within each symbol. Accordingly, a component containing an IDL type interface may be used in a distributed environment.

Thereafter, the file generator 150 generates an interface containing dependency information converted into an IDL type as an IDL file (operation S621). An example of the process will be described below with reference to FIG. 7.

FIG. 7 illustrates a process in which the dependency information of the interface is converted into the IDL type according to an example embodiment of the present invention. For example, according to dependency information described within an interface 700 of a first component, the first component imports information 704 on an IDL file ("Other.IDL") of a second component. Specifically, if the first component uses a predetermined function (for example, "funcC()") defined by the second component, the function "funcC()" is defined in "Other.IDL" of the second component. Furthermore, the first component includes information on a constant 706, a variable 708, and a function 710 defined within the first component's own source codes and exported to the outside. Moreover, the name of the interface 700 is "Sample 702." An IDL interface 730, in which the dependency information described within the interface 700 of the first component is converted into an IDL type, will be described below.

The converter 140 converts the dependency information into an IDL type. To this end, the generator 145 first generates the unique ID 712 and name 714 of the interface 730. Furthermore, the converter 140 converts the imported information 704 and the constant 706 into information 716 and a constant 718 suitable for the IDL type. Since the IDL type does not define a variable 708, the variable 708 is described after being converted by a predetermined method, so as to inform to the outside that the corresponding variable exists within the source codes of the first component. That is, as shown, the method may prevent direct access to the variable within the source codes of the first component from the outside, while allowing access thereto through a predetermined method. As shown, "int A" 708 may be converted by methods 720 and 720a, so as to inform to the outside that variable A is defined in the source codes of the first component, and to allow access to the variable A from the outside through the method. That is, a predetermined value corresponding to variable A may be input through the method "int getA()" 720, and a value input through the method "void setA([in] int_A)" 720a may be sent as the value of variable A within the source codes (implementation portion) of the first component. Next, the converter 140 converts the function 710 into a function 722 in accordance with an IDL type. In the process of converting in accordance with the IDL type, attributes may be defined within each symbol. Accordingly, a component containing an IDL type interface may be used in a distributed environment.

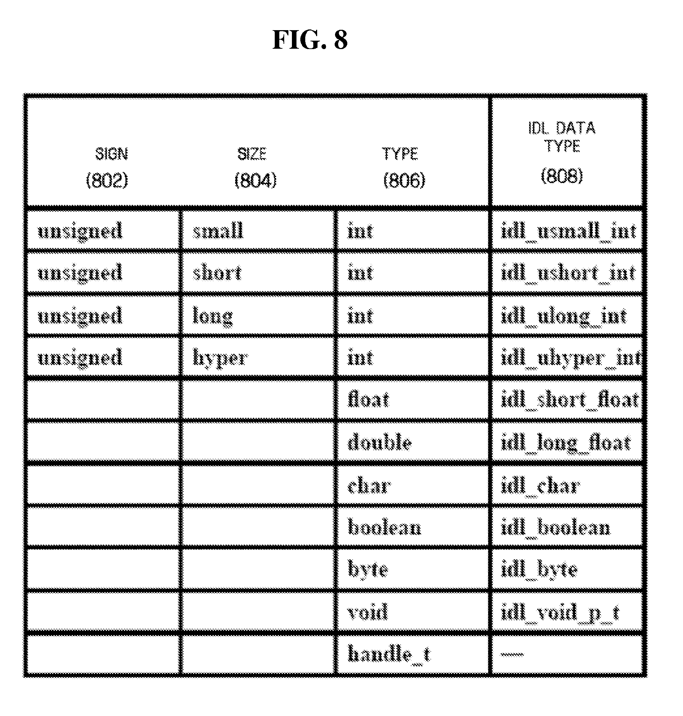

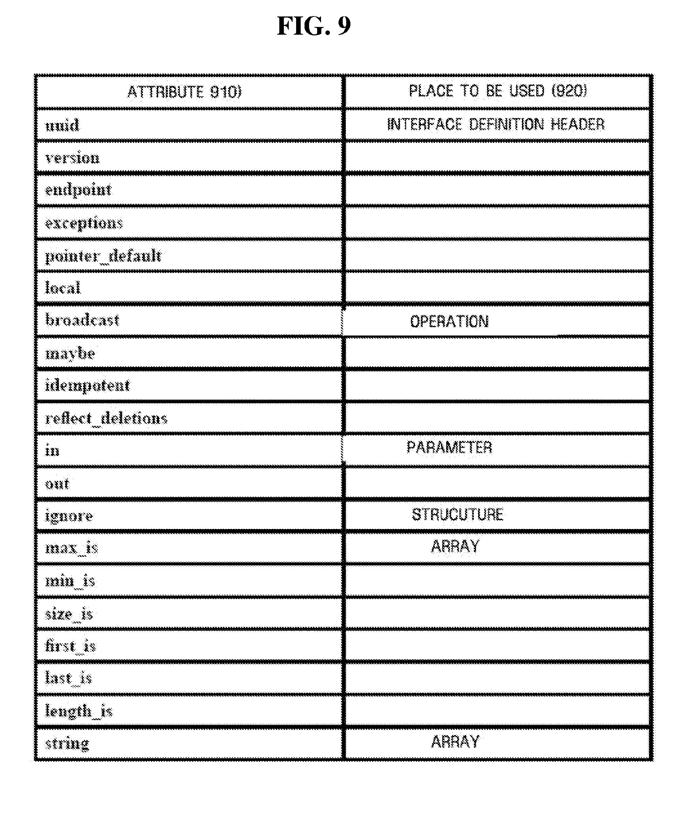

Meanwhile, the data types of the symbols 706, 708 and 710 within the dependency information are classified according to, for example, characteristics (such as a sign, size, etc.) and are converted into IDL data types. FIGS. 8 and 9 are tables showing examples of IDL data types and IDL attributes, respectively, according to an example embodiment of the present invention.

As shown in FIG. 8, the data types of the symbols 706, 708, and 710 contained in the dependency information in FIG. 7 are classified according to characteristics, and are converted into IDL data types. The characteristics may be classified into a sign 802, a size 804, and a type 806, and the converter 140 converts the classified data types of the symbols into IDL data types 808.

Furthermore, in the process of conversion to the IDL type, attributes may be defined within each symbol. Accordingly, a component containing an IDL type interface may be used in a distributed environment. For example, as shown in FIG. 9, when the attribute 910 is "in" or "out", the place to be used 920 may be used as a parameter (such as a function) of a symbol. A predetermined value may be input in the case of "in", and a result value obtained by the input and processing of the "in" may be output in the case of "out".

An interface containing the dependency information converted into the IDL type may be stored as an IDL file (for example, "A.IDL"), and may implement a component containing an IDL interface. Accordingly, a user, without specialized knowledge of the IDL, can easily develop a component that is not dependent on a specific environment and contains an interface that can be easily converted into a standard IDL by an apparatus according to aspects of the present invention.

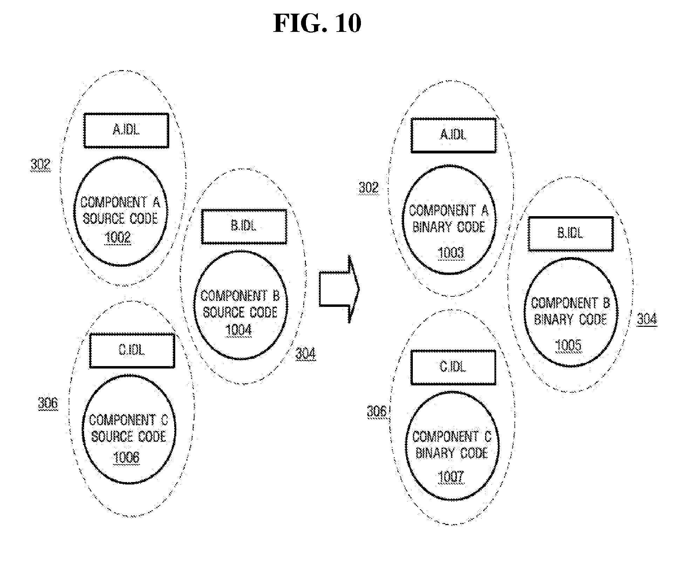

FIG. 10 is a conceptual view illustrating a process of verifying components implemented according to an example embodiment of the present invention. Interfaces containing dependency information converted into the IDL type may be stored as IDL files (such as "A.IDL", "B.IDL", and "C.IDL") for each of the components 302, 304, and 306, respectively. Symbols defined within the IDL files have been implemented in the source codes 1002, 1004, and 1006 of the components 302, 304, and 306, respectively. For example, if component A 302 imports functions or variables (symbols) defined in component B 304, the dependency verification unit 210 verifies whether the symbols used by component A are described (defined) within the interface of component B ("B.IDL").

Furthermore, the compiler 220 compiles the source codes 1002, 1004, and 1006 of the components, thereby converting them into binary codes 1003, 1005, and 1007, respectively.

The integrity verification unit 230, for example, verifies whether symbols that component A 302 will provide to the outside are described (defined) in an interface expressed in an IDL ("A.IDL") and exist in the binary code 1003 of the compiled component A. Through dependency and integrity verification as described above, it is possible to guarantee the reliability of a component.

An apparatus and a method for implementing and verifying components according to aspects of the present invention as described above have the following advantages. First, it is possible to implement a component that is not dependent on a specific environment. Second, it is possible to provide a reliable component by verifying the implemented component.

It is understood that the apparatus for implementing components, as shown in FIG. 1, and the apparatus for verifying components, as shown in FIG. 2, can be implemented as one apparatus that implements components and then verifies the implemented components. Various components of the apparatus as shown in FIGS. 1 and 2, such as the extractor 110 and the analyzer 120 can be integrated into a single control unit, or alternatively, can be implemented in software or hardware, such as, for example, an application specific integrated circuit (ASIC). As such, it is intended that the processes described herein be broadly interpreted as being equivalently performed by software, hardware, or a combination thereof. As previously discussed, software modules can be written, via a variety of software languages, including C, C++, Java, Visual Basic, and many others. These software modules may include data and instructions which can also be stored on one or more machine-readable storage media, such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact discs (CDs) or digital video discs (DVDs). Instructions of the software routines or modules may also be loaded or transported into the wireless cards or any computing devices on the wireless network in one of many different ways. For example, code segments including instructions stored on floppy discs, CD or DVD media, a hard disk, or transported through a network interface card, modem, or other interface device may be loaded into the system and executed as corresponding software routines or modules. In the loading or transport process, data signals that are embodied as carrier waves (transmitted over telephone lines, network lines, wireless links, cables, and the like) may communicate the code segments, including instructions, to the network node or element. Such carrier waves may be in the form of electrical, optical, acoustical, electromagnetic, or other types of signals.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for implementing components of software to enable the components to be executed by a processor irrespective of a specific environment, the apparatus comprising:
an analyzer (120) to analyze dependencies between a plurality of components;
a preparation unit (130) to define dependency information in interfaces of the plurality of components according to the analyzed dependencies; and
a converter (140) to convert the dependency information into Interface Definition Language (IDL) type information for enabling communication between different components irrespective of a language of each component within the software.

2. The apparatus as claimed in claim 1, further comprising:
an extractor (110) to extract symbols from source codes of the plurality of components,
wherein the analyzer (120) analyzes the dependencies using the extracted symbols.

3. The apparatus as claimed in claim 1 or 2, further comprising:
a file generator (150) to generate an IDL file by converting the interfaces of the plurality of components, which contain the converted IDL type dependency information.

4. The apparatus as claimed in claim 3, wherein the dependency information of a first component comprises at least one of first information and second information, the first information corresponding to information on one or more exported symbols provided to an outside of the first component and described in source codes of the first component, and the second information corresponding to information in an IDL file of a second component imported according to a dependency between the first component and the second component.

5. The apparatus as claimed in any preceding claim, wherein the converter (140) classifies data types of the symbols within the dependency information according to one or more characteristics of the symbols, and converts the classified data types into data types of the IDL type.

6. The apparatus as claimed in claim 5, wherein the one or more characteristics are at least one of a sign, a size, and/or a type of the symbols.

7. The apparatus as claimed in any preceding claim, wherein the converter (140) converts data types of the symbols within the dependency information into data types of the IDL type.

8. The apparatus as claimed in claim 6, wherein, when the symbol is a variable, the converter (140) converts the symbol by a predetermined method so that an external component can access the variable contained in the source code through the predetermined method.

9. An apparatus for verifying components of software to provide reliable components to be executed by a processor, the apparatus comprising:
a dependency verification unit (210) to verify whether definitions of symbols in interfaces of a plurality of components correspond to dependencies between the plurality of components; and
an integrity verification unit (230) to verify whether definitions of symbols in binary codes of the plurality of components coincide with the definitions of the symbols in the interfaces of the plurality of components.

10. The apparatus as claimed in claim 9, further comprising:
a compiler (220) to compile source codes of the plurality of components to convert the source codes into the binary codes.

11. The apparatus as claimed in claim 9, wherein the dependency verification unit (210) verifies whether a symbol imported by a first component from a second component is defined in an interface of the second component.

12. The apparatus as claimed in claim 9, wherein the interfaces are IDL type interfaces so that the components are not dependent on a specific environment.

13. A method of implementing components of software to enable the components to be executed by a processor irrespective of a specific environment, the method comprising:
analyzing dependencies between a plurality of components;
defining dependency information in interfaces of the plurality of components based on the analyzed dependencies; and
converting the dependency information into IDL type information for enabling communication between different components irrespective of a language of each component within the software.

14. The method as claimed in claim 13, further comprising:
extracting symbols from source codes of the plurality of components,
wherein the analyzing of the dependencies comprises analyzing the dependencies using the extracted symbols.

15. The method as claimed in claim 13, further comprising:
generating an IDL file by converting the interfaces of the plurality of components, which contain the converted IDL type dependency information.

16. The method as claimed in claim 13, wherein the dependency information of a first component comprises at least one of first information and second information, the first information corresponding to information on one or more exported symbols provided to an outside of the first component and described in source codes of the first component, and the second information corresponding to information in an IDL file of a second component imported according to a dependency between the first component and the second component.

17. The method as claimed in claim 13, wherein the converting of the dependency information into the IDL type information comprises:
classifying data types of the symbols within the dependency information according to one or more characteristics of the symbols; and
converting the classified data types into data types of the IDL type.

18. The method as claimed in claim 17, wherein the one or more characteristics are at least one of a sign, a size, and/or a type of the symbols.

19. The method as claimed in claim 13, wherein the converting of the dependency information into the IDL type information comprises:
converting data types of the symbols within the dependency information into data types of the IDL type.

20. The method as claimed in claim 19, wherein the converting of the data types of the symbols comprises:
converting the symbol by a predetermined method when the symbol is a variable so that an external component can access the variable contained in the source code through the predetermined method.

21. A method of verifying components of software to provide reliable components executed by a processor, the method comprising:
verifying whether definitions of symbols in interfaces of a plurality of components correspond to dependencies between the plurality of components; and
verifying whether definitions of symbols in binary codes of the plurality of components coincide with the definitions of the symbols in the interfaces of the plurality of components.

22. The method as claimed in claim 21, further comprising:
compiling source codes of the plurality of components to convert the source codes into the binary codes.

23. The method as claimed in claim 21, wherein the verifying of whether the definitions of the symbols in the interfaces of the plurality of components correspond to the dependencies between the plurality of components comprises:
verifying whether a symbol imported by a first component from a second component is defined in an interface of the second component.

24. The method as claimed in claim 21, wherein the interfaces are IDL type interfaces so that the components are not dependent on a specific environment.

25. An apparatus for implementing and verifying components of software to enable and provide reliable components to be executed by a processor irrespective of a specific environment, the apparatus comprising:
an analyzer (120) to analyze dependencies between a plurality of components;
a preparation unit (130) to define dependency information in interfaces of the plurality of components according to the analyzed dependencies;
a converter (140) to convert the dependency information into Interface Definition Language (IDL) type information for enabling communication between different components irrespective of a language of each component within the software;
a dependency verification unit (210) to verify whether definitions of symbols in the interfaces of the plurality of components correspond to the dependencies between the plurality of components; and
an integrity verification unit (230) to verify whether definitions of symbols in binary codes of the plurality of components coincide with the definitions of the symbols in the interfaces of the plurality of components.

26. A method of implementing and verifying components of software to enable and provide reliable components to be executed by a processor irrespective of a specific environment, the method comprising:
analyzing dependencies between a plurality of components;
defining dependency information in interfaces of the plurality of components based on the analyzed dependencies;
converting the dependency information into IDL type information for enabling communication between different components irrespective of a language of each component within the software;
verifying whether definitions of symbols in the interfaces of the plurality of components correspond to the dependencies between the plurality of components; and
verifying whether definitions of symbols in binary codes of the plurality of components coincide with the definitions of the symbols in the interfaces of the plurality of components.

27. The method as claimed in claim 26, further comprising:
compiling source codes of the plurality of components to convert the source codes into the binary codes.
